# EUROPÄISCHE PATENTSCHRIFT

(11) **EP 0 520 228 B1**
(45) Veröffentlichungstag und Bekanntmachung des Hinweises auf die Patenterteilung: **04.08.1999**
(21) Anmeldenummer: 92109620.2
(22) Anmeldetag: 06.06.1992
(51) Int. Cl.: G06F 1/00, G06F 12/14

(54) **Datenverarbeitungsanlage mit Zugriffsschutz**
Data processing system with access protection
Système de traitement de données avec accès protégé

(30) Priorität: 20.06.1991 DE 4120398
(43) Veröffentlichungstag der Anmeldung: 30.12.1992
(73) Patentinhaber: Alcatel SEL Aktiengesellschaft, D-70435 Stuttgart (DE); ALCATEL N.V., NL-1077 XX Amsterdam (NL)
(72) Erfinder: Erbes, Norbert, Dr., W-7500 Karlsruhe (DE); Rother, Dietrich, Dr., W-7141 Tamm (DE); Vogel, Rainer, Dr., W-7519 Walzbachtal 2 (DE); Prasse, Christoph, W-7132 Illingen (DE)
(74) Vertreter: Dreiss, Fuhlendorf, Steimle & Becker, Patentanwälte

(56) Entgegenhaltungen:
- EP-A- 0 171 456
- EP-A- 0 213 118
- DE-A- 3 601 526

## Beschreibung

Die Erfindung betrifft eine Datenverarbeitungsanlage mit einem Adreßbus und einem Datenbus, an die eine zentrale Verarbeitungseinheit, Arbeitspeicher und Steuerschaltungen für Peripheriegeräte angeschlossen sind.

Herkömmliche Datenverarbeitungsanlagen, wie beispielsweise Personal Computer, haben keine Möglichkeit, sich gegen unautorisierten Zugriff auf die zentrale Verarbeitungseinheit (im folgenden CPU genannt) zu schützen. So können beispielsweise von Terminals oder anderen Kommunikationsschnittstellen aus Programme in der CPU gestartet werden, die sowohl geladene Nutzerprogramme im Arbeitsspeicher verändern, als auch Programme und Daten in peripheren Massenspeichern zerstören können.

Aufgabe der Erfindung ist es, bestehende Datenverarbeitungsanlagen, wie z.B. Personal Computer, vor unautorisierten Zugriffen auf die CPU zu schützen.

Gelöst wird diese Aufgabe durch eine Datenverarbeitungsanlage mit der Merkmalskombination des Anspruchs 1. Die erfindungsgemäße Datenverarbeitungsanlage hat den Vorteil, daß der Schutz vor unautorisiertem Zugriff auf die CPU ohne Eingriffe in die bereits bestehende Software und ohne Eingriffe in die Rechner-Hardware möglich ist. Dabei wird von der Tatsache Gebrauch gemacht, daß es sich bei der CPU im allgemeinen um ein auf einen Sockel steckbares Bauelement handelt. Statt die CPU direkt auf den Sockel zu stecken, wird zunächst eine Verschlüsselungseinrichtung in den Sockel gesteckt, auf die dann die CPU gesteckt wird.

Die Erfindung macht hier zur Lösung der gestellten Aufgabe von der Erkenntnis Gebrauch, daß hier teils auf Lösungen zurückgegriffen werden kann, mit denen Software gegen Kopieren geschützt werden soll. Als Beispiele hierfür werden genannt:

Die EP 0 213 118 A2. Hier wird ein Verfahren und eine Anordnung zum Schutz von Software beschrieben. Die gegen Kopieren geschützte Software ist verschlüsselt und wird vor der Verarbeitung entschlüsselt. Schwerpunkt ist hier die optimale Verschlüsselung.

Die EP 0 171 456 A1. Hier wird ein Schutzsystem für eine EDV-Anlage beschrieben, in der sowohl die Daten als auch die Adressen umgewandelt werden, wenn sie für einen vordefinierten Adressenbereich bestimmt sind und ein bestimmter Befehl dekodiert wurde.

Die DE 36 01 526 A1. Hier wird ein Kopierschutzverfahren für Computerprogramme mit Hilfe einer beiliegenden Smartcard beschrieben, womit nicht der eigentliche Kopiervorgang, sondern die unbefugte Benutzung der kopierten Daten verhindert wird.

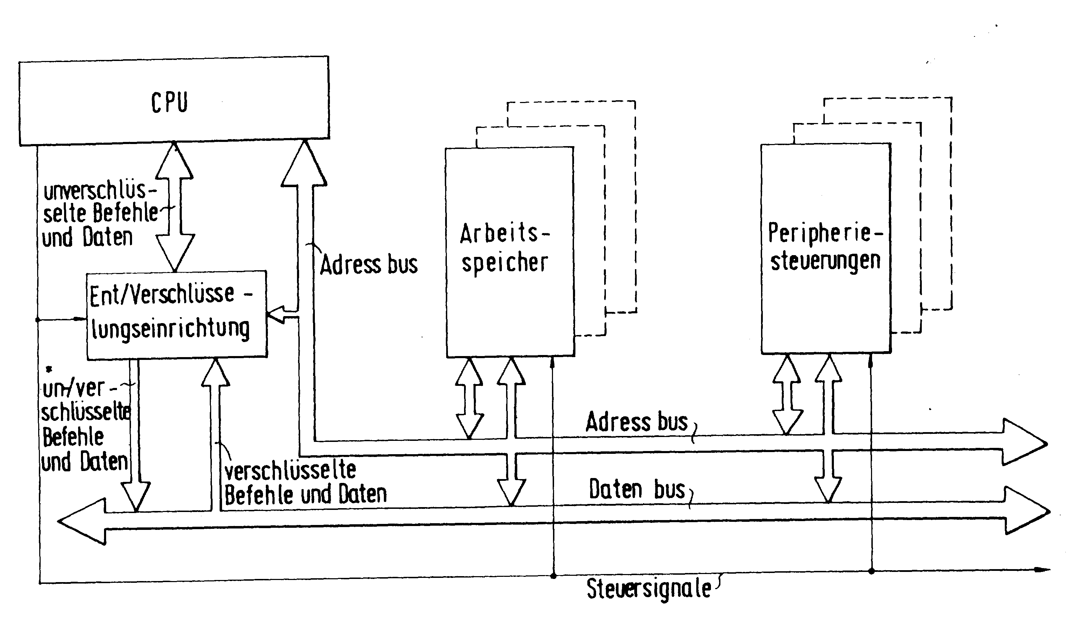

Die untergeordneten Ansprüche enthalten vorteilhafte Ausgestaltungen der Erfindung. Ein Ausführungsbeispiel der Erfindung wird anhand der einzigen Figur beschrieben.

Mit CPU ist eine zentrale Verarbeitungseinheit bezeichnet, die über eine Vielzahl von Leitungen mit einer Ent/Verschlüsselungseinrichtung in Verbindung steht. Die Ent/Verschlüsselungseinrichtung steht mit einem Datenbus in Verbindung. Sie nimmt Informationen vom Datenbus auf und gibt Informationen an den Datenbus ab. Weiterhin ist ein Adreßbus vorgesehen, der mit der Ent/Verschlüsselungseinrichtung und der CPU in Verbindung steht. Adreß- und Datenbus stehen mit einem Arbeitsspeicher und mit Steuereinrichtungen für periphere Geräte in Verbindung. Weiterhin ist eine Leitung vorgesehen, über die Steuersignale zur Steuerung der gesamten Einrichtung übermittelt werden.

Eine erste Betriebsart des Ausführungsbeispieles sieht vor, daß sowohl auf dem Daten- als auch auf dem Adreßbus ausschließlich verschlüsselte Informationen transportiert werden. Da die CPU nur unverschlüsselte Daten verarbeiten kann, müssen die Daten aus dem Datenbus und die Adressen aus dem Adreßbus, bevor sie in der CPU weiterverarbeitet werden, entschlüsselt werden. Dies geschieht in der Ent/Verschlüsselungseinrichtung. Im Arbeitsspeicher sind ausschließlich verschlüsselte Daten abgespeichert. Von den Peripheriegeräten gelangen auch ausschließlich verschlüsselte Daten auf den Adreß- und den Datenbus.

Eine zweite Betriebsart sieht vor, daß lediglich die Informationen auf dem Datenbus verschlüsselt sind. Auch in diesem Fall befinden sich im Arbeitsspeicher ausschließlich verschlüsselte Informationen. Auch von den Peripheriesteuerungen gelangen nur verschlüsselte Informationen auf den Datenbus. Die auf dem Adreßbus transportierten Adressen sind unverschlüsselt. Daten vom Datenbus in Richtung der CPU werden entschlüsselt und dann der CPU zur Weiterverarbeitung zugeführt. Ergebnisse, die die CPU berechnet hat, werden verschlüsselt und dann als verschlüsselte Information auf den Datenbus gegeben. Wenn es sich bei der CPU um einen steckbaren Prozessor handelt, ist vorgesehen, die Verschlüsselungseinrichtung ebenfalls als steckbares Bauelement auszuführen, das dann in den für die CPU vorgesehenen Sockel gesteckt wird. Die CPU wird anschließend auf die Verschlüsselungseinrichtung gesteckt.

## Patentansprüche

1. Datenverarbeitungsanlage mit einem Adreßbus und einem Datenbus, an die eine zentrale Verarbeitungseinheit, Arbeitsspeicher und Steuerschaltungen für Peripheriegeräte angeschlossen sind, bei der die auf dem Datenbus übertragenen Informationen verschlüsselt sind und die zur Ver- und Entschlüsselung der Informationen zwischen dem Daten-bus einerseits und der zentralen Verarbeitungseinheit andererseits eine Ver- und Entschlüsselungseinrichtung enthält und bei der eine Steckeinrichtung die Ver- und Entschlüsselungseinrichtung trägt und diese wiederum die ebenfalls steckbare zentrale Verarbeitungseinheit.

2. Datenverarbeitungseinheit nach Anspruch 1, dadurch gekennzeichnet, daß auch die Adressen auf dem Adressbus verschlüsselt sind und daß die Ver- und Entschlüsselungseinrichtung auch die Adressen entschlüsselt.

## Claims

1. A data-processing system comprising an address bus and a data bus to which are connected a central processing unit, main memories, and control circuits for peripheral equipment, wherein the information carried on the data bus is encrypted, wherein for the encryption and the decryption of the information an encryption and decryption device is provided between the data bus and the central processsing unit and wherein a plug-in device carries the encryption and decryption device, and wherein the latter in turn, carries the central processing unit.

2. A data-processing system as claimed in claim 1, characterized in that the addresses on the address bus are also encrypted, and that the encryption and decryption device also decrypts the addresses.

## Revendications

1. Dispositif de traitement de données avec un bus d'adressage et un bus de données, connectés à une unité centrale de traitement, à des mémoires de travail, à des commutateurs de commande pour des unités périphériques, dans lequel les informations transmises par le bus de données sont codées, qui comporte un dispositif de codage et de décoder les informations entre le bus de données d'une part et l'unité centrale de traitement d'autre part, dans lequel un dispositif enffichable porte le dispositif de codage et de décodage et où ce dernier porte l'unité centrale de traitement, elle-même enffichable.

2. Dispositif de traitement de données selon la revendication 1, caractérisé en ce que les adresses sur le bus d'adressage sont codées et en ce que le dispositif de codage et de décodage décode également les adresses.
